Europäisches Patentamt

European Patent Office

Office européen des brevets

(19)

(11) **EP 0 731 517 A1**

(12) # EUROPEAN PATENT APPLICATION
published in accordance with Art. 158(3) EPC

(43) Date of publication:
**11.09.1996 Bulletin 1996/37**

(21) Application number: **95931475.8**

(22) Date of filing: **04.09.1995**

(51) Int. Cl.$^6$: **H01M 6/14**

(86) International application number:
**PCT/RU95/00194**

(87) International publication number:
**WO 96/09658 (28.03.1996 Gazette 1996/14)**

(84) Designated Contracting States:
**DE ES FR GB IT NL PT SE**

(30) Priority: **21.09.1994 RU 94032967**

(71) Applicant: **ZAKRYTOE AKTSIONERNOE OBSCHESTVO "AVTOUAZ" Moscow (RU)**

(72) Inventors:
• **GRIGORIEVA, Ljudmila Konstantinovna Moscow, 117334 (RU)**

• **PAVLOV, Alexandr Petrovich Moskovskaya obl., 142092 (RU)**
• **STANKOV, Vitaly Khristoforovich Moscow, 117335 (RU)**
• **CHIZHIK, Semen Petrovich Moscow, 129626 (RU)**

(74) Representative: **Joly, Jean-Jacques Cabinet Beau de Loménie 158, rue de l'Université 75340 Paris Cédex 07 (FR)**

(54) **LITHIUM CHEMICAL CELL**

(57)    The invention relates to electrical engineering, more specifically to chemical cells with a lithium anode. The technical result is to increase operating life and ensure safety of operation. The proposed lithium chemical cell comprises a lithium anode (1) with a porous metal layer (4) on its surface, a separator (2), a non-aqueous electrolyte solution, and a cathode (3). The layer (4) can be pressed onto the surface of the anode (1) and made of a porous nickel foil of between 50 and 200 µm in thickness and with a porosity of 30-60 %, the size of the pores being between 1 and 200 µm.

EP 0 731 517 A1

## Description

### Field of the Invention

The invention relates to the field of electrical engineering and can be used in the production of chemical sources of electric energy having a metal lithium anode.

### Background Art

Rechargeable lithium chemical sources of electric energy (cells) with a liquid oxidizer (sulfur dioxide, thionyl chloride etc.) have high specific electrical characteristics. However, their industrial utilization is limited because of the danger of combustion and explosion which might occur due to overheating of the cell as a result of a short circuit of the electrodes. A short circuit of the electrodes of lithium chemical sources of electric energy occurs due to the formation of lithium dendrites (see V.S. Bagotsky, A.M. Skundin, Chemical Sources of Electric Energy. Moscow, Energoizdat, 1981, pp. 240-241).

Different measures are used to solve the aforesaid problem, such as introducing additives into the electrolyte which would limit the growth of dendrites, selecting more resistant separating materials, changing the construction of the separator etc., but these measures do not ensure an effective solution to the problem of short-circuiting electrodes (see Lynn Marcous, Greg Bruce, Development of 100 Ah Rechargeable Li-SO$_2$ Cell, Report made by contract No. P33615-91-c-2167δ 1993).

A lithium chemical source of electric energy is known comprising an anode made of metal lithium or a lithium alloy, a separator, a nonaqueous electrolyte solution, thionyl chloride as the cathode oxidizer and an inert cathode. In order to increase the service life of the lithium chemical source of electric energy, a passivating film of a polymer of lower acrylic ester of cyanoacrylic acid is applied onto the surface of the anode. This film protects the surface of the anode and contacts with the separator (see Japanese application No. 61-38584, IPC H01M 6/14, 1986).

However the service life in this known chemical source of energy is also limited, this being related to short-circuiting of the electrodes due to destruction of the separator and growth of dendrites through the separator.

The solution most similar to the instant invention in respect of technical essence is a lithium chemical source of electric energy comprising a metal lithium anode, a separator, a nonaqueous electrolyte solution, thionyl chloride as the cathode oxidizer, a carbon cathode with a porous metal plate positioned on the surface facing the anode (see EPO application No. 129880, IPC H01M 6/14, 1985). The purpose of the aforesaid plate is to protect the lithium chemical source of electric energy against explosion when the polarity is changed. Lithium dendrites produced in the chemical source of electric energy short circuit the anode and porous plate, thereby by-passing the flow of reverse current therethrough and excluding the possibility of an explosion. Thus, the introduction of the porous plate onto the cathode side does not exclude the formation of lithium dendrites, but uses their formation to protect the cell against a change of polarity. However, during cycling of the lithium chemical source of electric energy the produced dendrites cause short-circuiting of the electrodes and result in a breakdown of the chemical source of electric energy.

### Disclosure of the Invention

The object of the invention is to create a rechargeable lithium chemical source of electric energy which would have enhanced service life and be safe in operation.

The aforesaid technical result is achieved in a lithium chemical source of electric energy comprising a metal lithium anode, a separator, a nonaqueous electrolyte solution, a cathode and a porous metal plate positioned between the electrodes, in that in accordance with the invention, the porous metal plate is positioned on the surface of the anode facing the cathode.

The porous metal plate, without interfering with the flow of the charge and discharge current during cycling of the lithium cell, will hinder the formation of lithium dendrites and short-circuiting of the electrodes.

It is advisable that the porous metal plate be pressed onto the surface of the lithium anode. A plate positioned on the surface of the anode hinders the formation and growth of lithium dendrites and at the same times acts as a current tap.

It is advisable that the porous metal plate be made of porous nickel foil having a thickness of 50-200 μm, porosity - 30-60%, and pore size - 1-200 μm. Selection of nickel as the material from which the porous plate is made is due to its stability under the operating conditions of the lithium chemical source of electric energy and to its wide use in the process of production of chemical sources of electric energy. The lower limit--50 μm--of the thickness of the porous nickel foil is determined by the required mechanical strength and electric conductance. It is not advisable to use foil having a thickness greater than 200 μm because a further increase of the thickness reduces the specific electrical characteristics, but does not result in an increase of the service life.

The ranges of porosity of the metal foil and of pore size are determined by the internal electrical resistance of the lithium chemical source of electric energy and the reliability of protection against short-circuiting of the electrodes.

Minimum pore size and minimum porosity of nickel foil are determined by the permissible value of the internal resistance of the lithium source of electric energy. If the porosity is less than 30% and the pore size is less than 1 μm, the foil will screen the lithium electrode, making it difficult for current to flow and causing the internal resistance to increase, which results in impairment of the electrical characteristics. Foil having a porosity greater than 60% has insufficient mechanical strength and low electrical conductance, while dendrites call grow through pores having a size greater than 200 μm.

Brief Description of the Drawings

The invention will be explained below with reference to a drawing illustrating an example of its embodiment.

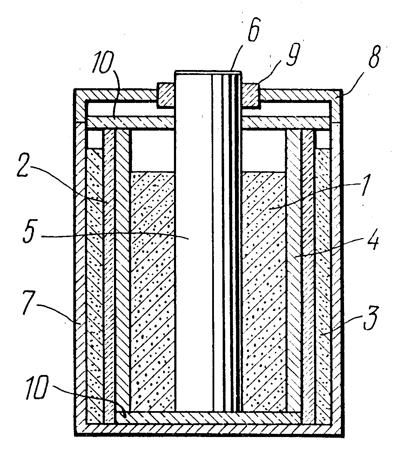

A cross section of a lithium chemical source of electric energy in a bobbin variant of its realization according to the invention is schematically shown in the drawing.

Method of Carrying Out the Invention

As shown in the drawing, the lithium chemical source of electric energy comprises an anode 1, a separator 2, a cathode 3 and a porous metal plate 4 positioned between the electrodes, wherewith the aforesaid plate is positioned on the surface of the anode 1, in particular, can be pressed onto it. The anode 1 is additionally provided with a current collector 5 and with a terminal 6. During assembly of the cell, a mechanical housing 7, simultaneously being a current collector and a terminal for the cathode 3, is welded to a cover 8, spaced from the anode terminal 6 by an electrically nonconducting insulator 9. An electrically nonconducting gasket 10 serves to prevent an electrical short-circuit of the working mass of the anode 1, the anode collector 5 and the metal porous foil 4 with the housing 7 of the lithium chemical source of electric energy.

The lithium chemical source of electric energy works in the following manner during discharge. Oxidation of lithium takes place at the anode 1, while reduction of the initial oxidizer with which the active mass of the cathode is impregnated takes place at the cathode 3. In the case where thionyl chloride $SOCl_2$ is used as the cathode oxidizer, the total current-forming reaction is

$$2SOCl_2 + 4Li \rightarrow 4LiCl + SO_2 + S$$

Discharge of the lithium chemical source of electric energy is limited by the precipitation of LiCl in the pores of the cathode 3 and by an increase of the pressure in the cell which is due to the formation of $SO_2$.

Thionyl chloride is an aggressive electrolyte. Because of this, in practice organic materials are unsuitable for production of the separator 2, and therefore separators are usually used which are made of glass fiber or other inorganic fibers without an organic binder. For the same reasons metal-glass bushing insulators 9 are used as the terminals 6. In the case of lengthy contact, thionyl chloride breaks down polyolefins and rubbers, and also a number of commonly used metals, e.g. copper, aluminum, titanium, iron, lead. Therefore it is advisable to use nickel or stainless steel as the structural material for the porous metal foil 4, anode collector 5, terminal 6 and housing 7, and glass and fluorinated polyolefins, e.g. fluoroplastic, as the insulating materials (in particular, the electrically nonconducting gasket 10).

The porous metal plate 4, without disturbing the flow of charge and discharge currents during cycling of the lithium cell, will hinder the formation of lithium dendrites and short-circuiting of electrodes 1, 3. During the charge of a lithium chemical source of electric energy, reduction of the lithium to a metallic phase takes place on the anode 1 with the formation of mossy, needle-shaped or spherical (depending on the type of cathodic oxidizer and anode used) dendrites. If there is no nickel porous plate 4, the process of dendrite growth during cycling of the cell is not held back and will finally result in the formation of a short circuit between the anode 1 and the cathode 3, which in turn will bring about the release of a large portion of the energy stored in the cell, and as a result, the occurrence of an explosion.

Where there is a plate 4, the dendrite growing to its surface forms with the more noble metal (e.g. nickel, stainless steel etc.) a local corrosive short-circuited cell in which the cathode is the metal. This results in activation of local processes of oxidization of the metal lithium dendrite and its destruction. The small size of the pores in the metal plate 4 do not make it possible for dendrites to grow through that plate without the occurrence of an electrical contact.

Example of Practical Realization

A lithium chemical source of electric energy was made with an anode of lithium foil, a separator of glass fiber, with a porous cathode on the base of carbon and with a solution of electrolyte on the base of thionyl chloride, propylene carbonate and $LiAlCl_4$ salt; a porous nickel foil 70 μm thick, with a porosity of 40% and average pore size 15 μm, was mounted between the anode and the separator. Alter assembly and sealing the cell was subjected to cycling.

Charging and discharging were carried out at a current density of 1.0 ma/cm$^2$. At a discharge level of 30%, the cell was tested during more than 50 cycles. Impairment of the electrical characteristics and changes of the internal resistance were not registered. The efficacy of cycling with regard to current reached 99%. Results of the tests which were carried out showed that the cell characteristics are stable in the process of cycling, wherewith the porous nickel foil does not have an effect on the flow of current.

Industrial Applicability

Lithium chemical sources of electric energy made in accordance with the invention can be produced in various structural variants: cylindrical (roll and bobbin) in the dimensions of a cylindrical series, including the standard series of the International Electrotechnical Commission (IEC), prismatic, disk and others, with a wide range of capacities from 0.22 to 17000 ah. Cells may be produced in versions with or without a reserve function.

Depending on the construction and capacity, cells made in accordance with the invention can be used in storage devices, measuring instrument equipment, small electronic instruments, communications means (cylindrical); in underwater transport means (large-capacity disk-type), and also for other specific uses requiring a high level of voluminous energy density and/or lengthy storage time prior to operation, for example, as reserve sources in the case of interruption of the power supply from an industrial mains or other source (prismatic capacity to 17000 ah.

**Claims**

1. A lithium chemical source of electric energy with a nonaqueous electrolyte solution, comprising an anode, a separator, a cathode and a porous metal plate positioned between the electrodes, characterized in that the porous metal plate is positioned on the surface of the anode.

2. A chemical source of electric energy according to claim 1, characterized in that the porous metal plate is pressed onto the surface of the anode.

3. A chemical source of electric energy according to claims 1, 2, characterized in that the porous metal plate is made of porous nickel foil 50-200 $\mu$m thick, with a porosity of 30-60% and pore size 1-200 $\mu$m.

# EP 0 731 517 A1

## INTERNATIONAL SEARCH REPORT

| International application No. |
|---|
| PCT/RU 95/00194 |

**A. CLASSIFICATION OF SUBJECT MATTER**

IPC 6: H01M 6/14

According to International Patent Classification (IPC) or to both national classification and IPC

**B. FIELDS SEARCHED**

Minimum documentation searched (classification system followed by classification symbols)

IPC 6: H01M 2/02, 4/02, 4/04, 6/14-6/18, 10/12, 10/36, 10/40, 10/44

Documentation searched other than minimum documentation to the extent that such documents are included in the fields searched

Electronic data base consulted during the international search (name of data base and. where practicable. search terms used)

**C. DOCUMENTS CONSIDERED TO BE RELEVANT**

| Category* | Citation of document, with indication, where appropriate, of the relevant passages | Relevant to claim No. |
|---|---|---|
| A | US, A, 5147739 (HONEYWELL INC.), 15 September 1992 (15.09.92), claim 1 | 1 |
| A | US, A, 5085955 (THE DOW CHEMICAL COMPANY) 4 February 1992 (04.02.92), claims 1, 18 | 1,2 |
| A | US, A, 4892796 (ALTUS CORPORATION), 9 January 1990 (09.01.90) | 1,2 |
| A | GB, A, 2115974 (DURACELL INTERNATIONAL INC.), 14 September 1983 (14.09.83), page 2, Fig. 2 | 1,4 |
| A | CA, A, 1199365 (FAWCETT WILLIAM R. et al.), 14 January 1986 (14.01.86), page 6 | 1 |
| A | AU, B, 13155/88 (IMPERIAL CHEMICAL INDUSTRIES PLC), 15 February 1990 (15.02.90) | 1,3 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance: the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure. use, exhibition or other means | "Y" | document of particular relevance: the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 15 November 1995 (15.11.95) | 14 December 1995 (14.12.95) |
| Name and mailing address of the ISA/ RU | Authorized officer |
| Facsimile No. | Telephone No. |

Form PCT/ISA/210 (second sheet) (July 1992)

6